# EUROPEAN PATENT SPECIFICATION

(11) **EP 2 614 130 B1**
(45) Date of publication and mention of the grant of the patent: **15.04.2015**
(21) Application number: 10779034.7
(22) Date of filing: 08.09.2010
(51) Int. Cl.: C10L 5/38, C10L 7/02, C10L 8/00, C01B 3/08

(54) **FUEL AND COMBUSTIBLE MIXTURE USED AS A SUBSTITUTE FOR FOSSIL FUELS IN THERMOELECTRIC POWER PLANTS, INDUSTRIAL AND CENTRAL HEATING FURNACES**
BRENNSTOFFZUSAMMENSETZUNG ALS ERSATZ FÜR FOSSILE BRENNSTOFFE IN THERMISCHEN KRAFTWERKEN UND VERBRENNUNGSÖFEN
COMPOSITION CARBURANTE COMME UN SUBSTITUT POUR DES CARBURANTS FOSSILE DANS DES CENTRALES THERMIQUES

(43) Date of publication of application: 17.07.2013
(73) Proprietor: Cor Brevis D.o.o., 10000 Zagreb (HR)
(72) Inventor: COSIC, Drago, HR-10000 Zagreb (HR)
(74) Representative: Dragun, Tihomir
(86) International application number: PCT/HR2010/000031
(87) International publication number: WO 2012/032363

(56) References cited:
- EP-A2- 1 386 955
- US-A- 3 297 502
- US-A- 4 670 018
- US-A1- 2008 152 584
- DATABASE WPI Week 200753 Thomson Scientific, London, GB; AN 2007-539290 XP002615540, & JP 2007 153667 A (ICHIGE H) 21 June 2007 (2007-06-21)

## Description

The Invention relates to a fuel and combustible mixture based on hydrogen generation that can be used as a substitute for fossil fuels in thermoelectric power plants (TEPP). The very fact that the Invention replaces fossil fuels implies that emissions of harmful exhaust gases like CO₂ are reduced. However, the invention has an additional property: it binds CO₂ generated by the burning of the part of coal which is not replaced. Furthermore, with the Invention it is possible to greatly reduce the quantity of dust generated as a by-product of the coal combustion process in TEPPs.

### TECHNICAL PROBLEM

The Invention is primarily aimed to prepare alternative fuel for TEPPs capable to replace a greater portion of coal needed for the production of the same quantity of electric power, which would cut the costs of coal mining and transportation to the TEPP. Another goal of the Invention concerns a major problem associated with electric power production in TEPPs, and that is the massive emission of greenhouse gases as a result of incomplete burning of coal.

The mentioned technical problems are solved in that a combustible mixture has been prepared, one that consists of solid phase and liquid phase, where the combustible mixture is so stored in an airtight container that a partition of the container separates the liquid phase from the solid phase, in the process of which the partition gradually disintegrates in contact with the liquid phase and thus allows gradual mixing of the liquid and solid phase, which in turn triggers chemical reactions resulting in production of hydrogen that burns in the TEPP's furnace.

### PRIOR ART

As far as known to the applicant, there is no similar fuel that on the basis of similar principles can be used as substitute fuel in a TEPP. A lot of effort is put into hydrogen generation in TEPPs, with hydrogen being then taken out of the furnace and stored, or being used in a separate plant that cogenerates electric power together with the TEPP. However, what all these efforts amount to are the principles of water steam gasification, where steam is brought into the furnace and where in the solid and gaseous phases the following chemical reactions take place:
in the solid phase:

| | |
|---|---|
| partial oxidation | C + ½ O₂ = CO |
| combustion | C +O₂ = CO₂ |
| gasification | C +H₂O = CO + H₂ |
| Boudouard reaction | CO + ½ O₂ = CO₂ |
| hydrogenation | C +2 H₂ = CH₄ |

in the liquid phase:

| | |
|---|---|
| partial oxidation | CO + ½ O₂ = CO₂ |
| water departure | CO + H₂O = CO₂ + H₂ |
| methanation | CO+ 3H₂ = CH₄ + H₂O |
| hydrogen oxidation | ½ O₂ + H₂ = H₂O |

The Invention incorporates all these reactions, especially relying on the fact that water at a high temperature of the TEPP furnace gets into contact with coal, so that such reactions are inevitable. However, the mentioned process is just a small segment of the process involved

in the Invention that allows both the production of hydrogen and its use *in situ* (without transportation and storage).

On the other hand, the document US7014834 describes the use of quick and/or slack lime for the absorption of CO₂ emissions from TEPPs. The basic chemical reactions that demonstrate the chemism of CO₂ absorption are as follows according to the said document:

C+H₂O=CO+H₂

H₂O + CO = CO₂ + H₂

CaO + CO₂ = CaCO₃

summed up: C + 2H₂O + CaO = CaCO₃ + 2H₂

In the solid phase of the combustible mixture the Invention provides for quick lime as one of the components, so the mentioned reactions of CO₂ separation also take place according to the Invention. However, the Invention provides for a polyvalent role of quick lime, i.e., quick lime serves not only and exclusively for CO₂ binding, but also for H₂ generation and participates in other reactions as well, those that enhance the burning properties of the combustible mixture.

Document with publication no. US2008/0152584 is considered to be closest prior art. US2008/0152584 discloses a mixture for hydrogen production. The mixture comprises a solid and a liquid phase. The solid phase contains aluminum, calcium oxide and sodium chloride, and the water is the sole component of the liquid phase. The mixture generates hydrogen and therefore can be seen as high energy fuel.

### SUMMARY OF THE INVENTION

Before describing the essence of the Invention, it will be appropriate to define the terms which will be used exclusively in meanings attached to them herein, unless otherwise specified.

The combustible mixture according to the Invention is a mixture consisting of a solid and a liquid phase. Each of these phases consists of more components. All the components will be listed below.

The invented fuel is the combustible mixture in an airtight container with or without an added insulator. The characteristics of the container and the interrelation and position of the solid and the liquid phase of the combustible phase inside the container will be described later in more detail. The container is considered a part of the fuel, because it is necessarily made up of combustible material and as such in the furnace assumes the role of a burning trigger according to the Invention. Through the reactions of the combustible mixture, hydrogen is generated and accumulates in the container. The container burns in the furnace and thereby initiates hydrogen burning. If the insulator is used, it must be from a combustible material. The insulator helps keep hydrogen inside the container by binding hydrogen. On the other hand, the insulator in the furnace stimulates the burning of the container and thus helps initiate hydrogen burning, and may itself be considered a part of the fuel.

Therefore, the Invention discloses a new combustible mixture, which in burning releases energy 15 times greater than that of lignite and 4-5 times than that of coke. In order to make it possible, the combustible mixture must be hermetically closed in the container. As the container is airtight, the generated hydrogen remains inside. In one version of the Invention, on the inside of the container the insulator is coated and binds hydrogen molecules in order to prevent any escape of hydrogen from the airtight container, whereas in the burning phase in the furnace the insulator and the container, which themselves are combustible materials, ignite hydrogen in the oxidation atmosphere of the boiler furnace. Examples of such an insulator are tar-based glues or similar materials. The container is made of polymer material, preferably polyvinyl chloride due to its good combustion properties.

Except for the combustible mixture, the Invention also presents fuel and fuel utilization methods in TEPP furnaces or in industrial furnaces or in central heating furnaces. The combustible mixture and the energy production fuel in TEPP's are described in detail. Combustible mixtures and fuels for industrial furnaces are adjusted by means of standard methods that should be familiar to an average expert in the field.

### DETAILED DESCRIPTION OF THE INVENTION

The mentioned combustible mixture, which can be used in TEPP's as substitute fuel for a portion of required coal, consists of solid and liquid phases, where the solid phase comprises:
aluminium powder; at least one M¹X₂, where M¹ can be any metal in oxidation state +2, and X can be any halogen; M²CO₃, where M² can be any two-valent metal; zinc ammonia chloride, SiO₂ in the form of quartz sand; and quick lime;
whereas the liquid phase comprises:
   at least one C₁ to C₆ carboxylic acid, or at least one anhydride of the mentioned carboxylic acids, or at least one its ester or amide; methylcellulose; and formaldehyde, or its commercially accessible solution - formalin; and water. The presence of water will be clear to an expert in the field, because the liquid matter is made of water solutions of the specified chemical compounds. For that reason the percentages of water in the liquid phase are self-explanatory and will not be mentioned again. As for the weight percentages of the solid and the liquid phase in the combustible mixture, the percentage of the solid phase in the mixture, according to the Invention, may vary from 32% w/w to 46% w/w, and that of the liquid phase from 54% w/w to 68% w/w. According to one version of the Invention, the share of the solid phase in the mixture varies between 36% w/w and 42% w/w, and that of the liquid phase between 58% w/w and 64% w/w. In an example of one of the ways of implementing the Invention given within this patent application, the share of the solid phase in the mixture is 39% w/w, and that of the liquid phase 61% w/w.

In the above specified solid phase weight percentages the said solid phase components participate in the solid phase with the following weight percentages:

| | |
|---|---|
| aluminium powder | 3% to 10% |
| M¹X₂ | 1% to 4% |
| M²CO₃ | 1% to 3% |
| zinc ammonia chloride | 2% to 5% |
| SiO₂ | 3% to 8% |
| quick lime | 70% to 90% |

According to one of more desirable versions of the Invention, the solid phase components are present in the following weight percentages:

| | |
|---|---|
| aluminium powder | 5% to 8% |
| M¹X₂ | 2% to 4% |
| M²CO₃ | 1% to 2% |
| zinc ammonia chloride | 3% to 5% |
| SiO₂ | 4% to 7% |
| quick lime | 74% to 85% |

whereas, for the needs of using the invented fuel as a fuel that replaces coal in TEPP's, the above specified solid phase components are present in the solid phase in the following weight percentages:

| | |
|---|---|
| aluminium powder | 7% |
| M¹X₂ | 3% |
| M²CO₃ | 1.5% |
| zinc ammonia chloride | 3.5% |
| SiO₂ | 6% |
| quick lime | 79% |

As for the liquid phase and its components and the share of these components, in the liquid phase they are present in the following weight percentages:
at least one carboxylic acid, or at least one anhydride of carboxylic acid, or at least one its ester or amide may be present in an interval from 10% to 27%;
methylcellulose may be present in an interval from 20% to 40%; whereas formaldehyde, or its commercially accessible solution - formalin may be present in an interval from 1% to 10%. That water makes the rest up to 100% is self-explanatory.

According to one of the versions of the Invention, the liquid phase components are present in the following weight percentages:
at least one carboxylic acid, or at least one anhydride of carboxylic acid, or at least one its ester or amide are present in an interval from 15% to 22%;
methylcellulose is present in an interval from 25% to 35%; and
formaldehyde, or its commercially accessible solution - formalin is present in an interval from 3% to 7%. In this case, too, water makes the rest up to 100%.
Whereas, in the described example of implementing the Invention, the liquid matter was used in the following weight percentages of the components:
at least one carboxylic acid, or at least one anhydride of carboxylic acid, or at least one its ester or amide was present in the percentage of 17%;
methylcellulose was present in the percentage of 29%; and
formaldehyde, or its commercially accessible solution - formalin in the percentage of 5%; whereas the rest up to 100% was water.

Otherwise, M¹ and M² from the above described combustible mixture or, more precisely, from the above described solid phase are selected, according to one version of the invention, among Fe, Cu, Zn. On the other hand, according to the same version, at least one carboxylic acid, or at least one of its derivatives is selected from the group made up of C₁ - C₃ carboxylic acid, or its derivatives; whereas methylcellulose is selected from the group made up of gelatine and tylosis.

During the use of fuel in a TEPP according to the Invention as a substitute for coal, which by no means should be regarded as a limiting factor and which as such does not narrow the scope and subject intended to be protected by the patent claims, M¹ and M² are Zn, where M¹X₂ represents the mixture of ZnCl₂ and ZnBr₂. Likewise, during the above mentioned use of the invented fuel - methylcellulose is tylosis, whereas in the liquid phase two carboxylic acids are present, viz.: C₁ carboxylic acid - known as formic acid, and C₂ carboxylic acid - known as acetic acid.

In order to improve the combustible properties of fuel, additives such as coke or ethanol may be added to the combustible mixture, where coke is being added to the solid phase and ethanol to the liquid phase.

Another feature of the Invention is the method proposed for energy production in TEPP's involving replacement of at least part of coal with the above described fuel. Up to the 50% of the coal can be replaced by the fuel. According to the Invention, up to 60% of required coal can be replaced, and up to 100% with some modifications, primarily in the materials that the TEPP furnaces are made of. The percentages specified in this paragraph can also refer to volume or any other shares. By its caloric value, 1 kg of the invented fuel replaces 15 kg of lignite and 4 - 5 kg of coke. In addition, with the method proposed by the Invention, CO₂ emissions can be reduced as much as up to 75%.

The next subject of the Invention is the use of the above described fuel as substitute/alternative fuel in TEPP's. During the use of the fuel concerned, the combustible mixture or its certain components bind harmful exhaust gases generated by coal burning in the TEPP. Above all it applies to CO₂ binding.

The task of the insulator with which the inside of the container is coated is hydrogen collection and activation in combustion processes. By means of methylcellulose the insulator does not allow outflowing hydrogen from the container. Methylcellulose may be gelatine or tylosis or any other industrially available methylcellulose.

The Invention can be applied in any furnaces spending solid fuel, including, in addition to TEPP's, industrial and central heating furnaces of varying capacity, provided that the minimum working temperature of the furnace is not lower than 350°C.

Once the fuel according to the present invention is supplied to the furnace, as a product of burning the salts of calcium aluminate 3CaO·Al₂O₃ are formed along with the release of 3 hydrogen molecules in the form of bubbles. Reactions between quartz sand, lime and water result in the formation of permolite-type calcium hydrosilicate. Sulphur needed for permolite formation is present in coal as impurity. The airtight container has function to collect hydrogen from these reactions as well as to act as a "fuse" at the moment when fuel is introduced into the furnace. Just as hydrogen burns with a flame in an oxygen atmosphere, oxygen can burn with a flame in a hydrogen atmosphere. If two volumes of hydrogen and one volume of oxygen are mixed together (explosive gas), the mixture will explode when ignited. Accordingly, present Invention provides for the generation of permolite-type calcium hydrosilicate from quartz sand, lime, water and sulphur from coal that during combustion extracts oxygen and thus prevents development of the explosive gas.

Aluminium is present in the solid phase of the combustible mixture in the form of high-purity aluminium powder. High purity means that it contains at least 90% of aluminium. The best results have been achieved with aluminium whose minimum specific surface according to Blen is 7000 cm²/g. The volume mass of aluminium powder in bulk in a favourable version of the Invention should be around 0.15kg/dm³.

One kilogram of hydrogen releases in burning 143,146 kJ/kg, whereas the new invented fuel releases during hydrogen burning 95,690 kJ/kg, i.e., 67% of the combustion energy of pure hydrogen. That much usability stems from the fact that hydrogen is already burning in the fuel - in other words hydrogen already burns inside the container, where the combustible mixture components in the container generate an oxidation atmosphere required for hydrogen burning.

Fuel burning according to the Invention evolves in 4 phases:
a) In the first phase hydrogen develops as a result of reactions between the liquid and solid phase components of the combustible mixture. Hydrogen is kept inside the fuel because it cannot escape from the container. Hydrogen is ignited in its container by means of the said container and the insulator, both being combustible substances.
b) Combustion of pure hydrogen in the immediate proximity of the mixture from which hydrogen has come out as a result of high temperature developed in the TEPP's furnace (1000°C) causes an accelerated separation of hydrogen from water contained in the combustible mixture.
c) The end of the hydrogen separation process is followed by the burning of aluminate salts and other combustible silicate components in the mixture.
d) Regardless of the way in which fuel is used in the combustion process, the incombustible part of the mixture, calcium oxide or quick lime, while travelling through the outgoing flue gases in the TEPP's chimney or other plants, additionally purifies harmful gases by binding them. In this way, up to 75% of outgoing flue gases are purified to a considerable extent, which makes them environmentally acceptable.

The container production process according to the Invention evolves as follows:
a) Two rollers mutually touching each other have 2 mm wide, 1 mm deep grooves on them placed face to face. That is to say, if the lower roller has grooves lengthwise, the grooves on the upper roller are so placed that, when by means of the current they cut through the double foil on the jacket, cut-out square/rectangles are obtained which hold the hydrogen production content inside. The space within the container has to be greater by two thirds of the content - the combustible mixture inside the container, in order to create space for the collection of hydrogen that will be produced by the combustible mixture in the granule.
b) After a certain time, more precisely, after a few hours the combustible mixture will produce enough hydrogen for the granule to look inflated. At this stage already it is ready for use, i.e., burning.

At temperatures higher than 300° C the plastic container burns and allows uniform separation of hydrogen from the fuel and its combustion, whereas oxygen from water binds to the combustible mixture components, with permolite-type calcium hydrosilicate being generated in the process, which prevents the development of the explosive gas.

As for zinc carbonate (ZnCO₃), as waterless it occurs in the form of white powder that is virtually insoluble in water. However, as a commercial product it is marketed in the hydrated form as base zinc carbonate (2ZnCO₃ x 3Zn(OH)₂). It is the base zinc carbonate that is used in the Invention.

The main reactions of the solid phase components with slack lime, Ca(OH)₂, produced when quick lime, CaO, gets in contact with water from the liquid phase of the combustible mixture, based on which hydrogen is obtained according to the Invention, are as follows:

1. 2Al + 3Ca(OH)₂ = 3CaOxAl₂O₃ + 3H₂

2. 2Al + Ca(OH)₂ + 6H₂O = Ca(Al(OH)₄)₂ + 3H₂

3. 7ZnBr₂+ Ca(OH)₂ + 6H₂O = 7ZnO + 7Br₂ + 7H₂ or 14HBr

4. 2ZnCO₃ + 3Ca(OH)₂ + = 2ZnO₂ +2CaCO₃ +2CaO + 3H₂

5. (2ZnCO₃ x 3Zn(OH)₂) + 2Ca(OH)₂ = 6ZnO₂ + CaCO₃+CaO + 5H₂

6. 2ZnCl₂ x 2NH₄Cl + 2Ca(OH)₂ +2H₂O = 2ZnO + 2NH₄OH +2CaO + 3H₂ + 2Cl₂

It should be noted that the other part of CaO in contact with water turns into hydrated lime - Ca(OH)₂ + 6H₂O that with aluminium starts the reaction listed under 2. above.

On the other hand, the main chemisms of the process between the liquid phase components of the combustible mixture and Ca(OH)₂, through which hydrogen is generated, are as follows:

7. 2HCOOH +2Ca(OH)₂ + 2H₂O =3CaO + 2CO₂ +6H₂

8. CH₃OH. + Ca(OH)₂ =CaCO₃ + 3H₂

9. . HCHO + Ca(OH)₂ + = CaCO₃ + 3H₂

Once the fuel container is burnt out, the following reactions take place:

10. C + H₂O = CO + H₂

11. H₂O + CO = CO₂ +H₂

12. CaO + CO₂ = CaCO₃

summed up: C + 2H₂O + CaO = CaCO₃ + 2H₂

In general, CaO is made from Ca(OH)₂ which has lost water due to heating, and C is carbon from coal. Therefore, according to the present invention, hydrogen is generated not only inside the fuel, but also through the reaction of water steam gasification. Responsible for hydrogen generation through reaction of water steam gasification is water from the fuel, i.e., the combustible mixture, and moisture from coal.

The lower heating value of coal varies from 29310 kJ/kg for anthracite to 12250 kJ/kg for lignite. In terms of the heating value, to replace 50% of coal mass, calculated upon 1000 kg base, 1250 Nm³ of hydrogen is needed for lignite and 521 Nm³ for anthracite. Converted into mass, this is 110 kg of hydrogen for anthracite and 42.7 kg of hydrogen for lignite.

Therefore, 1000 kg of anthracite gives as much heat as 500 kg of anthracite enriched with 110 kg of hydrogen, or, in the second case, 500 kg of lignite enriched with 42.7 kg of hydrogen. In other words, 8 mass percentages of the invented fuel substitutes approximately at least 50 mass percentages of coal. Furthermore, supposing that by its composition anthracite is 100% coal, the coal/hydrogen ratio for a mixture of 500 kg of coal and 110 kg of hydrogen equals C:H = 1:1.32. The ratio coal vs. hydrogen is one of the key energy and environmental indices. For natural gas this ratio C:H = 1:4, for petrol C:H = 1:2. In this regard, the greater the share of carbon, the more harmful the environmental impact, because greater quantities of carbon dioxide are produced by combustion. That is why the combustible mixture, or fuel according to the invention is prepared in a way to reduce environmental risks based on the reaction listed under 12 above.

## Claims

1. The combustible mixture, consisting of the solid and liquid phases, **characterized in that** the solid phase comprises:
aluminium powder;
at least one M¹X₂, where M¹ can be any metal in oxidation state +2, and X any halogen;
M²CO₃, where M² can be any metal in oxidation state +2;
zinc ammonia chloride;
SiO₂; and
quick lime;
and the liquid phase comprises:
at least one C₁ to C₆ carboxylic acid, or at least one anhydride of the said carboxylic acids, or at least one its ester or amid;
methylcellulose; and
formaldehyde, i.e. its commercially available solution - formalin;
and water,where the share of solid phase in the mixture varies between 32% w/w and 46% w/w, and that of the liquid phase between 54% w/w and 68% w/w,
whereas the solid phase components are present in the following weight percentages:
| | |
|---|---|
| aluminium powder | 3% to 10% |
| M¹X₂ | 1% to 4% |
| M²CO₃ | 1% to 3% |
| zinc ammonia chloride | 2% to 5% |
| SiO₂ | 3% to 8% |
| quick lime | 70% to 90%, |
and the liquid phase components are present in the following weight percentages:
at least one carboxylic acid, or at least one anhydride of carboxylic acid, or at least one its ester or amid 10% to 27%;
methylcellulose 20% - 40%;
formaldehyde, 1% to 10%;
and the rest up to 100% is water.

2. The combustible mixture according to Claim 1, **characterized in that** the share of the solid phase in the mixture varies between 36% w/w and 42% w/w, and that of the liquid phase between 58% w/w and 64% w/w.

3. The combustible mixture according to Claim 1, **characterized in that** the share of the solid phase in the mixture is 39% w/w, and that of the liquid phase 61% w/w.

4. The combustible mixture according to Claim 1, **characterized in that** the solid phase components are present in the following weight percentages:
| | |
|---|---|
| aluminium powder | 5% to 8% |
| M¹X₂ | 2% to 4% |
| M²CO₃ | 1% to 2% |
| zinc ammonia chloride | 3% to 5% |
| SiO₂ | 4% to 7% |
| quick lime | 74% to 85%. |

5. The combustible mixture according to Claim 4, **characterized in that** the solid phase components are present in the following weight percentages:
| | |
|---|---|
| aluminium powder | 7% |
| M¹X₂ | 3% |
| M²CO₃ | 1.5% |
| zinc ammonia chloride | 3.5% |
| SiO₂ | 6% |
| quick lime | 79%. |

6. The combustible mixture according to Claim 1, **characterized in that** the liquid phase components are present in the following weight percentages:
at least one carboxylic acid, or at least one anhydride of carboxylic acid, or at least one its ester or amid 15% to 22%;
methylcellulose 25% - 35%; and
formaldehyde, 3% to 7%;
and the rest up to 100% is water.

7. The combustible mixture according to Claim 6, **characterized in that** the liquid phase components are present in the following weight percentages:
at least one carboxylic acid, or at least one anhydride of carboxylic acid, or at least one its ester or amid 17%;
methylcellulose 29%; and
formaldehyde;
and the rest up to 100% is water.

8. The combustible mixture according to any of the preceding claims, **characterized in that** M¹ and M² are selected from a group consisting of Fe, Cu, Zn; that and at least one carboxylic acid, or at least one of its derivatives is selected from a group made up of C₁ - C₃ carboxylic acids, or its derivatives; and that methylcellulose is selected from a group made up of gelatine and tylosis.

9. The combustible mixture according to Claim 8, **characterized in that** M¹ and M² are Zn; that methylcellulose is tylosis.

10. The combustible mixture according to Claims 1, 6-8, **characterized in that** in the liquid phase two carboxylic acids are present: C₁ carboxilic acid and C₂ carboxilic acid.

11. The combustible mixture according to Claims 1, 4-5 and 9, **characterized in that** in the solid phase M¹X₂ consists of a mixture ZnCl₂ and ZnBr₂.

12. The combustible mixture according to any of the preceding claims, **characterized in that** it additionally contains coke and ethanol as additives.

13. The fuel, **characterized in that** it contains the combustible mixture according to all preceding claims is hermetically closed in the container.

14. The fuel according to Claim 13, **characterized in that** the hermetically closed container is made of polymer material.

15. The fuel according to Claim 14, **characterized in that** the hermetically closed container is made of polyvinyl chloride.

16. The fuel according to Claim 13, **characterized in that** the hermetically closed container is lined on the inside with an insulator.

17. The fuel according to Claim 13, **characterized in that** the heat insulator is a tar-based glue.

18. The fuel according to Claim 13, **characterized in that** one third of the hermetically closed container is filled with liquid and solid phases, whereas the rest of two thirds serves to receive the generated hydrogen.

19. The energy production method in thermoelectric power plants, **characterized in that** fuel according to any of the claims 13 - 18 is brought into the thermoelectric power plants furnace.

20. The use of fuel according to claims 13 - 19, **characterized in that** the said fuel is used as substitute fuel for coal in thermoelectric power plants.

21. The use of fuel according to Claim 20, **characterized in that** the property of the said fuel is to bind harmful flue gases developed as a result of incomplete coal burning in the thermoelectric power plants.

22. The use of fuel according to Claim 21, **characterized in that** the said mixture binds CO₂.

23. The use of fuel according to any of the claims 13 - 18, **characterized in that** the said fuel is used for energy production in industrial furnaces and in central heating furnaces.

## Patentansprüche

1. Dir brennbare Mischung, die aus der festen und flüssigen Phase besteht, ist **dadurch gekennzeichnet, dass** die feste Phase Folgendes einschließt:
Aluminiumpulver;
mindestens ein M¹X₂, wobei M¹ ein beliebiges Metall im Oxidationszustand +2, und X ein beliebiges Halogen sein kann;
M²CO₃, wobei M² ein beliebiges Metall im Oxidationszustand +2 sein kann; Zink- Ammoniak-Chlorid;
SiO₂;
und Branntkalk;
und die flüssige Phase schließt Folgendes ein:
mindestens eine C₁ bis C₆ Carboxylsäure bzw. mindestens ein Anhydrid der erwähnten Carboxylsäure oder mindestens ein Ester oder Amid;
Methylzellulose; und
Formaldehyd bzw. seine handelsübliche Lösung - Formalin; und Wasser, mit der
Beteiligung der festen Phase an der Mischung zwischen 32% w/w und 46% w/w und der flüssigen Phase zwischen 54% w/w und 68% w/w,
wobei die Komponenten der festen Phase in folgenden Gewichtsprozenten vorhanden sind:
| | |
|---|---|
| Aluminiumpulver | 3% bis 10% |
| M¹X₂ | 1% bis 4% |
| M²CO₃ | 1% bis 3% |
| Zink-Ammoniak-Chlorid | 2% bis 5% |
| SiO₂ | 3% bis 8% |
| Branntkalk | 70% bis 90%, |
und die Komponenten der flüssigen Phase sind in folgenden Gewichtsprozenten vorhanden:
| | |
|---|---|
| mindestens eine Carboxylsäure oder mindestens ein Anhydrid der Carboxylsäure, oder mindestens einer/einesihrer Ester oder Amide | 10% bis 27%; |
| Methylzellulose | 20% bis 40%; |
| Formaldehyd | 1% bis 10%; |
und der Rest bis 100% ist Wasser.

2. Die brennbare Mischung nach dem Anspruch 1 ist **dadurch gekennzeichnet, dass** der Anteil der festen Phase in der Mischung zwischen 36% w/w und 42% w/w und der Anteil der flüssigen Phase zwischen 58% w/w und 64% w/w variiert.

3. Die brennbare Mischung nach dem Anspruch 1 ist **dadurch gekennzeichnet, dass** der Anteil der festen Phase an der Mischung 39% w/w ist, und der Anteil der flüssigen Phase 61% w/w ist.

4. Die brennbare Mischung nach dem Anspruch 1 ist **dadurch gekennzeichnet, dass** die Komponenten der festen Phase in den folgenden Gewichtsprozenten vorhanden sind:
| | |
|---|---|
| Aluminiumpulver | 5% bis 8% |
| M¹X₂ | 2% bis 4% |
| M²CO₃ | 1% bis 2% |
| Zink-Ammoniak-Chlorid | 3% bis 5% |
| SiO₂ | 4% bis 7% |
| Branntkalk | 74% bis 85%. |

5. Die brennbare Mischung nach dem Anspruch 4 ist **dadurch gekennzeichnet, dass** die Komponenten der soliden Phase in folgenden Gewichtsprozenten vorhanden sind:
| | |
|---|---|
| Aluminiumpulver | 7% |
| M¹X₂ | 3% |
| M²CO₃ | 1.5% |
| Zink-Ammoniak-Chlorid | 3.5% |
| SiO₂ | 6% |
| Branntkalk | 79% |

6. Die brennbare Mischung nach dem Anspruch 1 ist**dadurch gekennzeichnet, dass** die Komponenten der flüssigen Phase in folgenden Gewichtsprozenten vorhanden sind:
mindestens eine Carboxylsäure oder mindestens ein Anhydrid einer Carboxylsäure, oder mindestens einer/eines ihrer Ester oder Amide 15% bis 22%;
Methylzellulose 25% - 35%; und
Formaldehyd, 3% bis 7%;
und der Rest bis zu 100% ist Wasser.

7. Die brennbare Mischung nach dem Anspruch 6 ist **dadurch gekennzeichnet, dass** die Komponenten der flüssigen Phase in den folgenden Gewichtsprozenten vorhanden sind:
mindestens eine Carboxylsäure oder mindestens ein Anhydrid einer Carboxylsäure oder mindestens einer/eines ihrer Ester oder Amide 17%;
Methylzellulose 29%; und Formaldehyd;
und der Rest bis zu 100% ist Wasser.

8. Die brennbare Mischung laut einer der vorhergehenden Anforderungen ist **dadurch gekennzeichnet, dass** M¹ und M² aus einer Gruppe bestehend aus Fe, Cu, Zn ausgewählt werden; dass mindestens eine Carboxylsäure oder mindestens eines ihrer Derivate aus einer aus C₁ - C₃ Carboxylsäuren oder ihrer Derivate bestehenden Gruppe ausgewählt wird; und dass Methylzellulose aus einer Gruppe aus Gelatine und Thylle ausgewähltwird.

9. Die brennbare Mischung nach dem Anspruch 8 ist **dadurch gekennzeichnet, dass** M¹ und M² Zn sind,und dass Methylzellulose Thylle ist.

10. Die brennbare Mischung nach dem Anspruch 1, 6-8 ist **dadurch gekennzeichnet, dass** in der flüssigen Phase zwei Carboxylsäuren vorhanden sind: C₁Carboxylsäure und C₂ Carboxylsäure.

11. Die brennbare Mischunglaut nach dem Anspruche 1, 4-5 und 9 ist **dadurch gekennzeichnet, dass** in der festen Phase M¹X₂ aus einem Gemisch von ZnCb und ZnBr₂ besteht.

12. Die brennbare Mischunglaut nach dem vorhergehenden Anspruche ist **dadurch gekennzeichnet, dass** es zusätzlich Koks und Ethanol als Additive enthält.

13. Der Brennstoff ist **dadurch gekennzeichnet, dass** er die brennbare Mischunglaut allen vorhergehenden Anforderungen hermetisch im Behälter verschlossen enthält.

14. Der Brennstoff nach dem Anspruch 13 ist **dadurch gekennzeichnet, dass** der hermetisch verschlossene Behälter aus einem Polymermaterial hergestellt ist.

15. Der Brennstoff nach dem Anspruch 14 ist **dadurch gekennzeichnet, dass** der hermetisch verschlossene Behälter aus Polyvinylchlorid hergestellt ist.

16. Der Brennstoff nach dem Anspruch 13 ist **dadurch gekennzeichnet, dass** der hermetisch verschlossene Behälter auf der Innenseite mit einem Isolator ausgelegt ist.

17. Der Brennstoff nach dem Anspruch 13 ist **dadurch gekennzeichnet, dass** der Wärmeisolator ein teerhaltiger Kleber ist.

18. Der Brennstoff nach dem Anspruch 13 ist **dadurch gekennzeichnet, dass** ein Drittel des hermetisch geschlossenen Behälters mit flüssiger und fester Phase gefüllt ist, während die übrigen zwei Drittel dazu dienen, den erzeugten Wasserstoff aufzunehmen.

19. Das Verfahren zur Energieerzeugung in thermoelektrischen Kraftwerken ist **dadurch gekennzeichnet, dass** Brennstoff nach dem Anspruche 13 bis 18 demBrennraum des thermoelektrischen Kraftwerkszugeführt wird.

20. Die Verwendung von Brennstoff nach dem Anspruche 13 bis 19 ist **dadurch gekennzeichnet, dass** der genannte Brennstoff als Ersatzbrennstoff für Kohle in thermoelektrischen Kraftwerken eingesetzt wird.

21. Die Verwendung von Brennstoff nach dem Anspruch 20 ist **dadurch gekennzeichnet, dass** die Charakteristik des Brennstoffsist, dass er schädliche Abgase aus unvollständiger Verbrennung von Kohle in thermoelektrischen Kraftwerken bindet.

22. Die Verwendung von Brennstoff nach dem Anspruch 21 ist **dadurch gekennzeichnet, dass** die Mischung CO₂ bindet.

23. Die Verwendung von Brennstoff laut Anforderungen 13-18 ist **dadurch gekennzeichnet, dass** der Brennstoff zur Energieerzeugung in Industrieöfen und in Zentralheizungskessel eingesetzt wird.

## Revendications

1. Le mélange combustible constitué de phases solide et liquide, **caractérisé en ce que** la phase solide comprend :
de la poudre d'aluminium ;
au moins un M¹X₂, où M¹ peut être n'importe quel métal au degré d'oxydation +2 et X n'importe quel halogène ;
du M²CO₃, où M² peut être n'importe quel métal de degré d'oxydation +2 ;
du chlorure de zinc ammoniacal :
du SiO₂ et
de la chaux vive ;
et **en ce que** la phase liquide comprend :
au moins un acide carboxylique C₁ à C₆ ou au moins un anhydride desdits acides carboxyliques ou au moins un de leurs esters ou amides ;
de la méthylcellulose et
du formaldéhyde, sous sa forme commerciale disponible, la formaline ;
et de l'eau, la part de la phase solide dans le mélange variant entre 32 % p/p et 46 % p/p et celle de la phase liquide entre 54 % p/p et 68 % p/p,
avec les composants de la phase solide présents dans les pourcentages massiques suivants :
| | |
|---|---|
| poudre d'aluminium | 3 % à 10 % |
| M¹X₂ | 1 % à 4 % |
| M²CO₃ | 1 % à 3 % |
| chlorure de zinc ammoniacal | 2 % à 5 % |
| SiO₂ | 3 % à 8 % |
| chaux vive | 70 % à 90 % |
et les composants de la phase liquide présents dans les pourcentages massiques suivants :
au moins un acide carboxylique, ou au moins un anhydride d'acide carboxylique, ou au moins un de ses esters ou amides, de 10 % à 27 % ;
de la méthylcellulose, de 20 % à 40 % ;
du formaldéhyde, de 1 % à 10 % ;
et de l'eau pour le solde jusqu'à 100 %.

2. Le mélange combustible selon la Revendication 1, **caractérisé en ce que** la part de la phase solide dans le mélange varie entre 36 % p/p et 42 % p/p et celle de la phase liquide varie entre 58 % p/p et 64 % p/p.

3. Le mélange combustible selon la Revendication 1, **caractérisé en ce que** la part de la phase solide dans le mélange est de 39 % p/p et celle de la phase liquide de 61 % p/p.

4. Le mélange combustible selon la Revendication 1, **caractérisé en ce que** les composants de la phase solide sont présents avec les pourcentages massiques suivants :
| | |
|---|---|
| poudre d'aluminium | 5 % à 8 % |
| M¹X₂ | 2 % à 4 % |
| M²CO₃ | 1 % à 2 % |
| chlorure de zinc ammoniacal | 3 % à 5 % |
| SiO₂ | 4 % à 7 % |
| chaux vive | 74 % à 85 % |

5. Le mélange combustible selon la Revendication 4, **caractérisé en ce que** les composants
de la phase solide sont présents avec les pourcentages massiques suivants :
| | |
|---|---|
| poudre d'aluminium | 7 % |
| M¹X₂ | 3 % |
| M²CO₃ | 1,5 % |
| chlorure de zinc ammoniacal | 3,5 % |
| SiO₂ | 6 % |
| chaux vive | 79 % |

6. Le mélange combustible selon la Revendication 1, **caractérisé en ce que** les composants de la phase liquide sont présents avec les pourcentages massiques suivants :
au moins un acide carboxylique ou au moins un anhydride d'acide carboxylique, ou au moins un de ses esters ou amides, de 15 % à 22 % ;
de la méthylcellulose, de 25 % à 35 % ;
du formaldéhyde, de 3 % à 7 % ;
et de l'eau pour le solde jusqu'à 100 %.

7. Le mélange combustible selon la Revendication 6, **caractérisé en ce que** les composants de la phase liquide sont présents avec les pourcentages massiques suivants :
au moins un acide carboxylique ou au moins un anhydride d'acide carboxylique, ou au moins un de ses esters ou amides, 17 % ;
de la méthylcellulose, 29 % ;
du formaldéhyde ;
et de l'eau pour le solde jusqu'à 100 %.

8. Le mélange combustible selon l'une quelconque des Revendications ci-dessus, **caractérisé en ce que** M¹ et M² sont choisis dans un groupe constitué de Fe, Cu et Zn et qu'au moins un acide carboxylique, ou au moins un de ses dérivés, est choisi dans un groupe constitué d'acides carboxyliques C₁ - C₃, ou de leurs dérivés, et que la méthylcellulose est choisie dans un groupe constitué de gélatine et de tylose.

9. Le mélange combustible selon la Revendication 8, **caractérisé en ce que** M¹ et M² sont du Zn et la méthylcellulose est du tylose.

10. Le mélange combustible selon les Revendications 1, 6-8, **caractérisé en ce que** deux acides carboxyliques sont présents dans la phase liquide : l'acide carboxylique C₁ et l'acide carboxylique C₂.

11. Le mélange combustible selon les Revendications 1, 4-5 et 9, **caractérisé en ce que**, dans la phase solide, M¹ X₂ consiste en un mélange de ZnCl₂ et ZnBr₂.

12. Le mélange combustible selon l'une quelconque des Revendications précédentes, **caractérisé en ce qu'**il contient également du coke et de l'éthanol en tant qu'additifs.

13. Le combustible, **caractérisé en ce qu'**il contient le mélange combustible selon toutes les Revendications précédentes hermétiquement enfermé dans son contenant.

14. Le combustible selon la Revendication 13, **caractérisé en ce que** le contenant hermétiquement fermé est fait de matériau polymère.

15. Le combustible selon la Revendication 14, **caractérisé en ce que** le contenant hermétiquement fermé est en chlorure de polyvinyle.

16. Le combustible selon la Revendication 13, **caractérisé en ce que** les parois intérieures du contenant hermétiquement fermé sont tapissées d'un isolant.

17. Le combustible selon la Revendication 13, **caractérisé en ce que** l'isolant thermique est une colle à base de goudron.

18. Le combustible selon la Revendication 13, **caractérisé en ce qu'**un tiers du contenant hermétiquement fermé est rempli par les phases solide et liquide, les deux tiers restants étant destinés à recevoir l'hydrogène généré.

19. Le procédé de production d'énergie dans les centrales thermiques, **caractérisé en ce que** le combustible selon l'une quelconque des Revendications 13-18 est chargé dans les fours des centrales thermiques.

20. L'utilisation du combustible selon les Revendications 13-19, **caractérisée en ce que** ledit mélange combustible sert de combustible en remplacement du charbon dans les centrales thermiques.

21. L'utilisation du combustible selon la Revendication 20, **caractérisée en ce que** la propriété dudit combustible est d'assurer la liaison des gaz de combustion toxiques se développant suite à la combustion incomplète du charbon dans les centrales thermiques.

22. L'utilisation du combustible selon la Revendication 21, **caractérisée en ce que** ledit mélange combustible sert d'agent pour la liaison du CO₂.

23. L'utilisation du combustible selon l'une quelconque des Revendications 13- 18, **caractérisée en ce que** ledit combustible est utilisé pour la production d'énergie dans les fourneaux industriels et les chaudières de chauffage central.
